# EUROPÄISCHE PATENTSCHRIFT

(11) **EP 2 538 619 B1**
(45) Veröffentlichungstag und Bekanntmachung des Hinweises auf die Patenterteilung: **18.12.2013**
(21) Anmeldenummer: 11170979.6
(22) Anmeldetag: 22.06.2011
(51) Int. Cl.: H04L 12/40, H04L 12/851

(54) **Verfahren zur Übertragung von Datenpaketen**
Method for transferring data packets
Procédé destiné à la transmission de paquets de données

(43) Veröffentlichungstag der Anmeldung: 26.12.2012
(73) Patentinhaber: Siemens Aktiengesellschaft, 80333 München (DE)
(72) Erfinder: Götz, Franz-Josef, 91180 Heideck (DE); Steindl, Günter, 92284 Poppenricht (DE)

(56) Entgegenhaltungen:
- EP-A1- 1 734 700
- WO-A1-2009/089850
- WO-A1-2010/026067
- WO-A2-98/36608
- US-A1- 2002 087 716

## Beschreibung

Die Erfindung betrifft ein Verfahren zur Übertragung von Datenpaketen in einem Ethernet-Automatisierungsnetzwerk, insbesondere ein Verfahren zur Übertragung von Datenpaketen mit unterschiedlichen Prioritäten.

Aus dem Stand der Technik sind Verfahren zur Übertragung von Datenpaketen bekannt. Die DE 10 2008 039 580 A1 offenbart ein Verfahren zum Übertragen von Datenpaketen in einem Kommunikationsnetz, wobei erste Datenpakete mit einer niedrigen Priorität zwischen einem Sender und einem Empfänger des Kommunikationsnetzes übertragen werden und wobei zweite Datenpakete mit einer hohen Priorität gegenüber den ersten Datenpaketen bevorzugt zwischen dem Sender und dem Empfänger übertragen werden. Bei einem von dem Sender an den Empfänger zu übertragenden zweiten Datenpaket wird überprüft, ob gegenwärtig ein erstes Datenpaket übertragen wird. Wenn die Überprüfung, ob gegenwärtig ein erstes Datenpaket übertragen wird, positiv ist, wird die Übertragung des ersten Datenpaketes abgebrochen oder unterbrochen und das zweite Datenpaket wird im Anschluss daran übertragen. Nach der Übertragung des zweiten Datenpakets wird die Übertragung des nicht übertragenen ersten Datenpakets wiederholt oder des Rests des unvollständig übertragenen ersten Datenpaketes veranlasst. Jedes erste Datenpaket wird parallel zu einem Sendevorgang in einem Zwischenspeicher gespeichert und wird erst nach einer vollständigen Übertragung des ersten Datenpakets an den Empfänger aus dem Zwischenspeicher gelöscht.

Die EP 1 734 700 A1 beschreibt ein Verfahren zur Übertragung von Daten in einem Datennetz unter Verwendung einer Ethernet-Datenübertragungsstrecke. Es wird ein Verfahren zur Übertragung von Daten beschrieben, bei dem die Übertragung eines ersten Datentelegramms, dem eine erste Priorität zugeordnet ist, für die Übertragung eines zweiten Datentelegramms, dem eine zweite Priorität zugeordnet ist, unterbrochen wird.

Die W02009/089850 A1 beschreibt ein Verfahren zum Betreiben eines Kommunikationsnetzes, insbesondere eines lokalen Datennetzes gemäß der Ethernet-Technik. Um die Latenzzeiten bei der Übertragung von zeitsensitiven Datenrahmen zu verringern, wird erfindungsgemäß ein erster Datenrahmen von einem Switch in mehrere Datenfragmente aufgeteilt, zumindest eines der Datenfragmente des ersten Datenrahmens über einen Sende-Port des Switches an einen Empfangs-Port eines anderen Switches übertragen, die Übertragung der Datenfragmente des ersten Datenrahmens von dem Switch unterbrochen und zumindest ein zweiter Datenrahmen mit einer im Vergleich zum ersten Datenrahmen höheren Priorität über den Sende-Port des Switches an den Empfangs-Port des anderen Switches übertragen, anschließend die Übertragung der Datenfragmente des ersten Datenrahmens über den Sende-Port des Switches an den Empfangs-Port des anderen Switches fortgesetzt und der erste Datenrahmen von dem anderen Switch aus den empfangenen Datenfragmenten wiederhergestellt. Darüber hinaus betrifft die vorliegende Erfindung einen Switch sowie ein Kommunikationsnetz.

Demgegenüber liegt der Erfindung die Aufgabe zugrunde, ein verbessertes Verfahren zur Übertragung von Datenpaketen in einem Ethernet-Automatisierungsnetzwerk, einen verbesserten Sender für ein Ethernet-Automatisierungssystem, ein verbessertes Computerprogrammprodukt und ein verbessertes Automatisierungssystem zu schaffen.

Die der Erfindung zugrunde liegenden Aufgaben werden mit den Merkmalen der unabhängigen Ansprüche gelöst. Ausführungsformen der Erfindung sind in den abhängigen Ansprüchen angegeben.

Die Erfindung betrifft ein Verfahren zur Übertragung von Datenpaketen in einem Ethernet-Automatisierungsnetzwerk. Die Datenpakete bestehen dabei aus mehreren Datenframes. Eine Mindestgröße der Datenframes beträgt weniger als 64 Bytes. Die Mindestgröße von Datenframes in Ethernet-Netzwerken, die aus dem Stand der Technik bekannt sind, beträgt 64 Bytes, da über diese Mindestgröße die Kollisionserkennung im Ethernet funktioniert. Die Kollisionserkennung im Ethernet funktioniert nach dem sogenannten Carrier Sense Multiple Access/Collision Detection (CSMA/CD)-Verfahren. Hierfür ist eine Mindest-Framegröße von 64 Bytes notwendig, damit ein Sender die Kollision des abgesendeten Frames mit einem anderen Frame detektieren kann und somit Informationen darüber hat, dass dieser Frame nicht korrekt vom Empfänger empfangen wurde.

Bei einem Verfahren nach Ausführungsformen der Erfindung wird ein erstes Datenpaket mit einer ersten Priorität durch einen Sender empfangen. Der Sender kann beispielsweise ein Netzwerkknoten, ein Router, ein Switch oder eine Bridge sein. Daraufhin wird ein Sendevorgang des ersten Datenpakets von dem Sender zu einem Empfänger gestartet. Während des Sendevorgangs wird ein zweites Datenpaket mit einer zweiten Priorität empfangen. Die zweite Priorität ist dabei höher als die erste Priorität. Außerdem soll das zweite Datenpaket an den Empfänger übertragen werden. Es ist zu beachten, dass auch mehr Prioritäten als lediglich zwei Prioritäten möglich sind. Die unterschiedlichen Prioritätsstufen geben die Wichtigkeit des Datenpakets innerhalb des Netzwerks an. Beispielsweise weisen Echtzeitdaten eine relativ hohe Priorität oder sogar die höchste Priorität auf, während Benutzerdaten wie beispielsweise Internetdaten eine relative niedrige Priorität oder sogar die niedrigste Priorität aufweisen. Durch den Vergleich der Prioritäten erhält der Sender Informationen darüber, wie wichtig ein Paket für die Funktionsweise des Automatisierungsnetzwerks ist. Echtzeitdaten sollen beispielsweise möglichst schnell weitergeleitet werden, da eine Verzögerung den Automatisierungsprozess, der durch das Automatisierungsnetzwerk ausgeführt wird, stören kann.

Ein Automatisierungsnetzwerk kann z.B. als industrielles Automatisierungsnetzwerk ausgebildet sein. Solche industriellen Automatisierungsnetzwerke können z.B. zur Steuerung und/oder Regelung von industriellen Anlagen (z.B. Produktionsanlagen, Förderanlagen usw.), Maschinen und/oder Geräten ausgebildet, eingerichtet und/oder vorgesehen sein. Insbesondere können Automatisierungsnetzwerke bzw. industrielle Automatisierungsnetzwerke Echzeit-Kommunikationsprotokolle (z.B. Profinet, Profibus, Real-Time-Ethernet)zur Kommunikation zumindest zwischen den an den Steuerungs- und/oder Regelungsaufgaben beteiligten Komponenten (z.B. zwischen den Steuerungseinheiten und den zu steuernden Anlagen und/oder Maschinen) aufweisen. Die sichere Übertragung von Daten über Speichermedien ist ebenfalls abgedeckt.

Weiterhin kann neben einem Echtzeit-Kommunikationsprotokoll aber auch noch mindestens ein weiteres Kommunikationsprotokoll (das z.B. nicht echtzeitfähig zu sein braucht) in dem Automatisierungsnetzwerk bzw. industriellen Automatisierungsnetzwerk vorgesehen sein, z.B. zum Überwachen, Einrichten, Umprogrammieren und/oder Umparametrieren einer oder mehrerer Steuerungseinheiten im Automatisierungsnetzwerk.

Ein Automatisierungsnetzwerk kann z.B. drahtgebundene Kommunikationskomponenten und/oder drahtlose Kommunikationskomponenten umfassen. Außerdem kann ein Automatisierungsnetzwerk zumindest eine Automatisierungseinrichtung umfassen.

Eine Automatisierungseinrichtung kann beispielsweise ein Computer, PC und/oder Controller mit Steuerungs-Aufgaben bzw. Steuerungs-Fähigkeiten sein. Insbesondere kann eine Automatisierungseinrichtung beispielsweise eine industrielle Automatisierungseinrichtung sein, die z.B. speziell zur Steuerung und/oder Regelung industrieller Anlagen ausgebildet, eingerichtet und/oder vorgesehen sein kann. Insbesondere können solche Automatisierungseinrichtungen bzw. industriellen Automatisierungseinrichtungen echtzeitfähig sein, d.h. eine Steuerung bzw. Regelung in Echtzeit ermöglichen. Dazu kann die Automatisierungseinrichtung bzw. die industrielle Automatisierungseinrichtung z.B. ein Echtzeitbetriebssystem umfassen und/oder zumindest unter anderem ein echtzeitfähiges Kommunikationsprotokoll zur Kommunikation (z.B. Profinet, Profibus, Real-Time-Ethernet) unterstützen.

Ein Automatisierungsnetzwerk umfasst mehrere Sensoren und Aktuatoren. Die Aktuatoren und Sensoren werden von zumindest einer Steuerungseinrichtung gesteuert. Die Aktuatoren, die Sensoren und die zumindest eine Steuerungseinrichtung tauschen Daten miteinander aus. Zum Datenaustausch wird ein Automatisierungsprotokoll verwendet. Die zumindest eine Steuerungseinrichtung steuert die Aktuatoren, die Sensoren und den Datenaustausch so, dass ein maschineller Fertigungsprozess abläuft, in dem z.B. ein Produkt hergestellt wird.

Eine industrielle Automatisierungseinrichtung kann z.B. eine speicherprogrammierbare Steuerung, ein Modul oder Teil einer speicherprogrammierbaren Steuerung, eine in einem Computer oder PC integrierte speicherprogrammierbare Steuerung sowie entsprechende Feldgeräte, Sensoren und/oder Aktoren, Ein- und/oder Ausgabegeräte oder Ähnliches zum Anschluss an einer speicherprogrammierbare Steuerung sein oder solche umfassen.

Als Automatisierungsprotokoll im Sinne der vorliegenden Erfindung wird jede Art von Protokoll verstanden, das zur Kommunikation mit Automatisierungs-Einrichtungen gemäß der vorliegenden Beschreibung vorgesehen, geeignet und/oder eingerichtet ist. Solche Automatisierungsprotokolle können beispielsweise das Profibus-Protokoll (z. B. gemäß IEC 61158/EN50170), ein Profibus-DP-Protokoll, ein Profibus-PA-Protokoll, ein Profinet-Protokoll, ein Profinet-IO-Protokoll, ein Protokoll gemäß AS-Interface, ein Protokoll gemäß IO-Link, ein KNX-Protokoll, ein Protokoll gemäß einer Mehrpunkt-Schnittstelle (Multipoint-Interface, MPI), ein Protokoll für eine Punkt-zu-Punkt-Kopplung (Point-to-Point, PtP), ein Protokoll gemäß den Spezifikationen der S7-Kommunikation (welches beispielsweise zur Kommunikation von speicherprogrammierbaren Steuerungen der Firma Siemens vorgesehen und eingerichtet ist) oder auch ein Industrial-Ethernet-Protokoll oder Real-Time-Ethernt-Protokoll bzw. weitere spezifische Protokolle für die Kommunikation mit Automatisierungsgeräten sein. Als Automatisierungsprotokoll im Sinne der vorliegenden Beschreibung können auch beliebige Kombinationen der vorgenannten Protokolle vorgesehen sein.

Falls also solch ein zweites Datenpaket mit einer höheren Priorität als das erste Datenpaket empfangen wird, bricht der Sender den Sendevorgang des ersten Datenpaketes innerhalb eines der Datenframes des ersten Datenpakets ab. Der Sendevorgang wird zu dem Zeitpunkt abgebrochen, an dem das zweite Datenpaket empfangen wird. Es wird also die Übertragung des Datenframes abgebrochen, der sich zu dem Zeitpunkt des Empfangs des zweiten Datenpakets im Sendevorgang befindet. Daraufhin erfolgt die Übertragung des zweiten Datenpakets von dem Sender zu dem Empfänger.

Der Abbruch des Sendevorganges innerhalb eines Datenframes hat den Vorteil, dass die höherpriorisierten Daten schneller durch den Sender gesendet werden. Im Stand der Technik wird dagegen ein Datenframe immer bis zum Ende übertragen. Dadurch ergibt sich bei einer Mindestgröße des Datenframes von 64 Bytes, wie es im Ethernet vorgeschrieben ist, eine Verzögerung von 5 Mikrosekunden bei einer Übertragungsgeschwindigkeit von 100 Mbit/s, falls der Sendevorgang des Datenframes gerade erst gestartet wurde, wenn das zweite Datenpaket empfangen wird. Falls nun beispielsweise das zweite Datenpaket Echtzeitdaten umfasst, würden diese Echtzeitdaten durch den Sender um 5 µs verspätet weitergeleitet. Diese Verspätung multipliziert sich in jedem Sender des Automatisierungsnetzwerks. Es ergibt sich also eine insgesamte Verzögerung von 5 µs pro Netzwerkknoten. Dies kann dazu führen, dass die Echtzeitdaten zu sehr verzögert werden und es zu Fehlern im Automatisierungsnetzwerk kommt.

Dadurch, dass die Mindestgröße der Datenframes weniger als 64 Bytes beträgt, wird diese Verzögerung beim Senden des zweiten Datenpakets verringert. Wenn beispielsweise ein Datenframe nur aus einem 1 Byte besteht, sinkt die Verzögerung bei einer Datenübertragungsgeschwindigkeit von 100 Mbit/s auf 80 ns. Die Mindestgröße der Datenframes kann auf bis zu 1 Byte reduziert werden. Dieses 1 Byte darf nicht unterschritten werden, um keinen Alignmentfehler zu erzeugen.

Bei einem Abbruch des Sendevorgangs des ersten Datenpakets innerhalb des Datenframes, wenn die Mindestgröße des Datenframes noch nicht erreicht ist, sinkt die Verzögerung bei der Sendung des zweiten Datenpaketes auf 40 ns bei einer Geschwindigkeit von 100 Mbit/s. In diesem Fall muss nämlich nur noch das letzte Nibble gesendet werden. Ein Nibble ist ein halbes Byte, also 4 Bits. Hier muss nicht ein ganzes Byte übertragen werden, da ein Alignmentfehler keine wesentlichen Auswirkungen hat. Der abgebrochene Datenframe wird beim Empfänger sowie verworfen. In diesem Falle wird der Alignmentfehler, der durch das Abbrechen des Datenframes ohne Sendung des letzten kompletten Bytes entsteht, unwichtig. Der abgebrochene Datenframe muss anschließend, wenn das zweite Datenpaket übertragen wurde, erneut übertragen werden. Falls ein Teil des abgebrochenen Datenframes bereits vom Empfänger empfangen wurde, wird dieser im Empfänger verworfen.

Das letzte Nibble muss komplett übertragen werden, da beispielsweise sogenannte Reduced Media Independent Interfaces (RMII) mit Nibbles arbeitet. Die Übertragung von weniger als 1 Nibble, also 4 Bits, ist hier nicht möglich.

Die Reduzierung der Mindestgröße der Datenframes auf weniger als 64 Bytes ist vorteilhaft, da so weniger oft die Übertragung des ersten Datenpakets innerhalb eines Frames abgebrochen werden muss. Je kleiner die Framegröße ist, desto seltener muss der Sendevorgang abgebrochen werden, um das zweite Datenpaket zu übertragen. Je größer die Mindestgröße der Datenframes ist, desto öfter wird der Sendevorgang des ersten Datenpakets innerhalb eines der Datenframes des ersten Datenpakets abgebrochen, wodurch sich die insgesamte Übertragungszeit des ersten Datenpakets erheblich verzögert, da der unterbrochene Datenframe immer wieder übertragen werden muss. Somit würden Datenpakete mit einer niedrigen Priorität extrem langsam durch das Automatisierungsnetzwerk übertragen, weil ihre Datenübertragung immer wieder durch Datenpakete mit einer zweiten Priorität unterbrochen werden würde.

Jeder Datenframe des ersten Datenpakets wird während des Sendevorgangs zwischengespeichert. Im Falle des Abbruchs des Sendevorgangs wird der Datenframe, dessen Übertragung abgebrochen wurde, nochmals auf den Zwischenspeicher übertragen. Dies geschieht, nachdem das zweite Datenpaket übertragen wurde.

Durch die Zwischenspeicherung der Datenframes wird erreicht, dass bei Unterbrechung des Sendevorgangs der Datenframe, dessen Übertragung unterbrochen wurde, nicht verloren geht. Ein solcher Datenframe wird nicht korrekt vom Empfänger empfangen. Daher muss er nochmals an den Empfänger übertragen werden.

Nach Ausführungsformen der Erfindung erfolgen der Sendevorgang des ersten Datenpakets und die Übertragung des zweiten Datenpakets über einen Übertragungsweg von dem Sender zu dem Empfänger. Dieser Übertragungsweg wird ausschließlich für Datenübertragungen von dem Sender zu dem Empfänger im Vollduplex-Verfahren genutzt. Mit anderen Worten können zeitgleich zwischen dem Sender und dem Empfänger in beiden Richtungen Datenpakete ausgetauscht werden, ohne dass es zu Kollisionen zwischen den Datenpaketen kommt. Durch dieses Merkmal werden Kollisionen zwischen Datenpaketen, die in entgegengesetzten Richtungen über den gleichen Übertragungsweg übertragen werden, vermieden. Somit werden Kollisionen auch dann vermieden, wenn die Mindestgröße der Datenframes weniger als 64 Bytes beträgt.

Nach Ausführungsformen der Erfindung wird die Übertragung des ersten Datenpakets nach Übertragung eines Nibbles abgebrochen. Ein Nibble besteht aus 4 Bits. Alternativ kann die Übertragung des ersten Datenpakets nach Übertragung eines kompletten Bytes abgebrochen werden. Dies kann beispielsweise bei Media Independent Interfaces (MII) der Fall sein, wo die kleinste übertragbare Einheit ein Byte ist.

Nach Ausführungsformen der Erfindung leitet der Sender einen Datenframe der Datenframes des ersten und des zweiten Datenpakets sofort weiter, nachdem ein erster Teil dieses Datenframes empfangen wurde. Dies kann auch als sogenanntes Cut Through Switching bezeichnet werden. Hierdurch wird die Weiterleitung der Datenpakete beschleunigt, da mit dem Senden an den Empfänger nicht gewartet wird, bis das Datenpaket durch den Sender komplett empfangen wurde.

Nach Ausführungsformen der Erfindung umfasst jeder der Datenframes des ersten und des zweiten Datenpakets eine Zieladresse. Die Zieladresse legt fest, über welchen Netzwerkanschluss des Senders der jeweilige Datenframe an den Empfänger übertragen wird. Mit anderen Worten wird der Sendeport des Senders durch die Zieladresse festgelegt. An dem Sendeport, der auch als Netzwerkanschluss bezeichnet werden kann, ist nur der Empfänger angeschlossen. Somit wird eine schnelle Weiterleitung der Datenpakete gewährleistet, da durch einfaches Auslesen der Zieladresse direkt der Netzwerkanschluss festgelegt ist, über den der jeweilige Datenframe an den Empfänger übertragen werden soll.

Nach Ausführungsformen der Erfindung umfasst das zweite Datenpaket Echtzeitdaten des Automatisierungsnetzwerks. Die Echtzeitdaten des Automatisierungsnetzwerks müssen möglichst schnell weitergeleitet werden, da sie essentiell für den korrekten Ablauf des Automatisierungsprozesses innerhalb des Automatisierungsnetzwerks sind. Insbesondere kann durch eine übermäßige Verzögerung der Echtzeitdaten der Automatisierungsprozess ins Stocken geraten oder nur noch fehlerhaft ablaufen. Daher ist es vorteilhaft, dass das zweite Datenpaket mit der höheren Priorität möglichst schnell durch den Sender an den Empfänger gesendet wird.

In einem weiteren Aspekt betrifft die Erfindung einen Sender für ein Ethernet-Automatisierungsnetzwerk zur Übertragung von Datenpaketen. Die Datenpakete bestehen aus mehreren Datenframes. Eine Mindestgröße der Datenframes beträgt weniger als 64 Bytes. Der Sende umfasst Mittel zum Empfangen eines ersten Datenpakets mit einer ersten Priorität. Dies kann beispielsweise ein Netzwerkanschluss sein. Außerdem umfasst der Sender Mittel zum Start eines Sendevorgangs des ersten Datenpakets zu einem Empfänger. Beispielsweise kann der Sendevorgang durch einen Prozessor gestartet werden. Das erste Datenpaket kann beispielsweise über einen weiteren Netzwerkanschluss an den Empfänger gesendet werden.

Ferner umfasst der Sender Mittel zum Empfang eines zweiten Datenpakets mit einer zweiten Priorität. Dies kann beispielsweise über den gleichen Netzwerkanschluss wie das erste Datenpaket oder über einen anderen Netzwerkanschluss empfangen werden. Die zweite Priorität ist höher als die erste Priorität des ersten Datenpakets. Das zweite Datenpaket soll ebenfalls an den Empfänger übertragen werden. Dies kann beispielsweise durch eine Zieladresse, die das Datenpaket umfasst, festgelegt sein. Die Zieladresse kann beispielsweise durch den Prozessor ausgelesen werden.

Außerdem umfasst der Sender Mittel zum Abbruch des Sendevorgangs des ersten Datenpakets innerhalb eines der Datenframes des ersten Datenpakets. Es wird der Sendevorgang bei dem Datenframe abgebrochen, der sich zu dem Zeitpunkt des Empfangs des zweiten Datenpakets im Sendevorgang befindet. Der Sendevorgang des ersten Datenpakets wird dann abgebrochen, wenn das zweite Datenpaket mit der zweiten Priorität empfangen wird. Der Sender umfasst außerdem Mittel zur Übertragung des zweiten Datenpakets an den Empfänger. Dies kann beispielsweise über den gleichen Netzwerkanschluss wie der Sendevorgang des ersten Datenpakets erfolgen.

In noch einem weiteren Aspekt betrifft die Erfindung ein Computerprogrammprodukt mit durch einen Sender ausführbaren Instruktionen, die bei Ausführung den Sender zur Durchführung eines Verfahrens nach Ausführungsformen der Erfindung veranlassen.

In noch einem weiteren Aspekt betrifft die Erfindung ein Automatisierungsnetzwerk mit zumindest einem Sender nach Ausführungsformen der Erfindung.

Nachfolgend werden Ausführungsformen der Erfindung anhand der Figuren näher erläutert. Es zeigen:
- Figur 1: eine schematische Ansicht eines Datenpakets bestehend aus mehreren Datenframes;
- Figur 2: ein Blockdiagramm eines Senders nach Ausführungsformen der Erfindung; und
- Figur 3: ein Flussdiagramm eines Verfahrens nach Ausführungsformen der Erfindung.

Elemente der nachfolgenden Figuren werden mit denselben Bezugszeichen gekennzeichnet, wenn die Funktion des Elementes identisch ist.

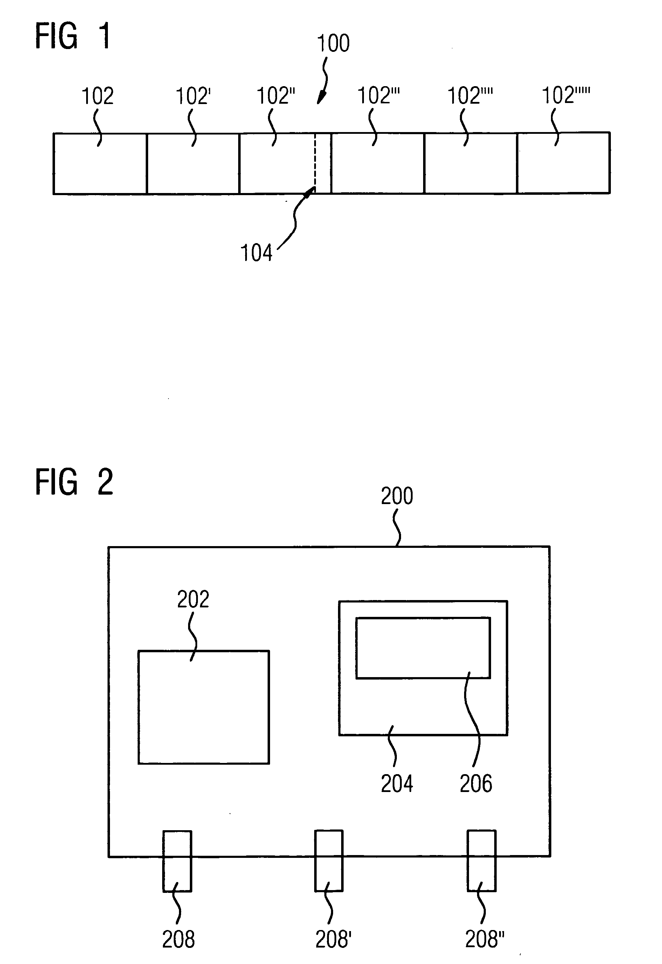

Figur 1 ist eine schematische Ansicht eines Datenpakets 100. Das Datenpaket 100 besteht aus mehreren Frames 102-102'''''. Jeder Datenframe 102 weist eine Mindestgröße von weniger als 64 Bytes auf. Bei der Weiterleitung des Datenpakets 100 durch einen Sender wie beispielsweise einem Netzwerkknoten, einem Router, einem Switch, oder einer Bridge kann der Sendevorgang des Datenpakets innerhalb eines der Datenframes 102-102''''' abgebrochen werden. In Figur 1 ist beispielsweise dargestellt, dass die Übertragung des Datenframes 102" an der Stelle 104 abgebrochen wird. Ein Abbruch des Sendevorgangs des Datenframes 102" an der Stelle 104 kann beispielsweise dann erfolgen, wenn durch den Sender, der diesen Datenframe 102" im Moment sendet, ein anderes Datenpaket (Figur 1 nicht dargestellt) gesendet werden soll, das eine höhere Priorität als das hier dargestellte Datenpaket 100 hat. Dies kann beispielsweise der Fall sein, wenn das Datenpaket 100 Benutzerdaten wie zum Beispiel Internetdaten umfasst, und das andere in Figur 1 nicht dargestellte Datenpaket wichtige Echtzeitdaten umfasst, die essentiell für den Automatisierungsprozess des Automatisierungsnetzwerks sind. Falls nun weitere Datenpakete an den gleichen Empfänger weitergeleitet werden sollen, wird die Übertragung des Datenframes 102" abgebrochen, ohne dass der Datenframe 102" an den Empfänger komplett übertragen wird. Somit kann das höher priorisierte nicht dargestellte Datenpaket mit den Echtzeitdaten möglichst schnell an den Empfänger weitergeleitet werden. Der abgebrochene Datenframe 102" wird nach Übertragung des höher priorisierten Datenpakets nochmals übertragen, da er nicht korrekt vom Empfänger empfangen werden konnte, weil er nicht komplett übertragen wurde.

Die Reduzierung der Mindestgröße der Datenframes auf weniger als 64 Bytes ist außerdem vorteilhaft, da so die Übertragung eines Datenframes nicht so häufig abgebrochen werden muss wie bei Datenframes mit einer höheren Mindestgröße. Somit werden auch niedrig priorisierte Daten zuverlässig mit einer annehmbaren Geschwindigkeit übertragen. Bei einer größeren Mindestgröße der Datenframes 102 würden die Übertragungen der niedrig priorisierten Datenframes 102 häufig abgebrochen, da ein höher priorisiertes Datenpaket übertragen werden muss. In diesem Falle würde sich die Weiterleitung von niedrig priorisierten Daten erheblich verzögern.

Figur 2 ist ein Blockdiagramm eines Senders 200 mit einem Prozessor 202, einem Datenspeicher 204 und Programminstruktionen 206. Der Prozessor 202 ist zur Ausführung der Programminstruktionen 206 ausgebildet. Ferner umfasst der Sender 200 Netzwerkanschlüsse 208-208''. Über die Netzwerkanschlüsse 208-208'' ist der Sender 200 mit anderen Komponenten des Automatisierungsnetzwerks verbunden. Beispielsweise kann der Sender 200 über den Netzwerkanschluss 208 mit einem Empfänger verbunden sein und mit den Netzwerkanschlüssen 208' und 208" mit anderen Sendern, von denen der Sender 200 wiederum Daten empfängt. Mit anderen Worten ist der Sender 200 in diesem Falle dazu ausgebildet, Datenpakete, die über einen der Netzwerkanschlüsse 208' oder 208" empfangen werden, über den Netzwerkanschluss 208 an den Empfänger auszugeben.

Im Betrieb wird ein erstes Datenpaket mit einer ersten Priorität über einen der Netzwerkanschlüsse 208' oder 208" empfangen. Daraufhin liest der Prozessor 202 die Zieladresse des ersten Datenpaketes aus und startet einen Sendevorgang des ersten Datenpakets zu dem Empfänger über den Netzwerkanschluss 208. Während des Sendevorgangs wird über einen der Netzwerkanschlüsse 208' oder 208" ein zweites Datenpaket mit einer zweiten Priorität empfangen. Die zweite Priorität ist höher als die erste Priorität. Der Prozessor 202 liest auch hier die Zieladresse des zweiten Datenpakets aus. Die Zieladresse stimmt mit der Zieladresse des ersten Datenpaketes überein. Mit anderen Worten soll also das zweite Datenpaket ebenfalls an den Empfänger übertragen werden. Auch die Prioritäten werden jeweils von dem Prozessor ausgelesen. Durch Vergleich der ersten Priorität mit der zweiten Priorität verfügt der Prozessor 202 über Informationen, dass die Weiterleitung des zweiten Datenpaketes wichtiger für das Automatisierungsnetzwerk ist als der Sendevorgang des ersten Datenpaketes. Daher wird der Sendevorgang des ersten Datenpaketes innerhalb eines der Datenframes des ersten Datenpaketes abgebrochen. Der Abbruch erfolgt bei dem Datenframe, der sich zu dem Zeitpunkt des Empfangs des zweiten Datenpakets im Sendevorgang befindet. Es wird also schnellstmöglich das zweite Datenpaket an den Empfänger gesendet. Dies reduziert die Verzögerungszeit bei hochpriorisierten Daten wie beispielsweise Echtzeitdaten. Nach Abbruch des Sendevorgangs des ersten Datenpaketes wird das zweite Datenpaket an den Empfänger über den Netzwerkanschluss 208 übertragen. Wenn die Übertragung des zweiten Datenpaketes erfolgt ist, kann der Sendevorgang des ersten Datenpaketes wieder aufgenommen werden. Hierzu wird der abgebrochene Datenframe nochmals übertragen, da dieser zuvor nicht korrekt vom Empfänger empfangen werden konnte. Das erste Datenpaket inklusive des abgebrochenen Datenframes kann beispielsweise in dem Datenspeicher 204 oder in einem anderen Datenspeicher gespeichert werden. Es kann entweder das ganze Datenpaket gespeichert werden oder aber auch nur ein Teil. Beispielsweise kann jeweils ein Datenframe des ersten Datenpaketes gelöscht werden, wenn dieser komplett übertragen wurde. Somit befinden sich im Datenspeicher nur noch Datenframes des ersten Datenpaketes, die noch nicht komplett zum Empfänger übertragen wurden.

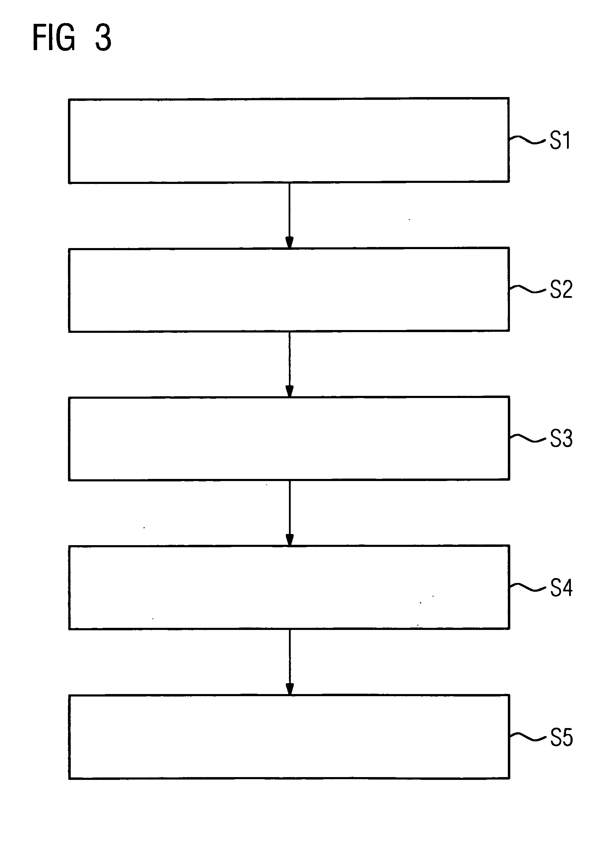

Figur 3 ist ein Flussdiagramm eines Verfahrens nach Ausführungsformen der Erfindung. In einem ersten Schritt S1 wird das erste Datenpaket mit der ersten Priorität durch den Sender empfangen. Darauf wird im Schritt S2 der Sendevorgang des ersten Datenpaketes von dem Sender zu dem Empfänger gestartet. Dieser Sendevorgang dauert während Schritt S3 noch an. In Schritt S3 wird das zweite Datenpaket mit der zweiten Priorität zu einem Zeitpunkt durch den Sender empfangen, während der Sendevorgang des ersten Datenpaketes noch läuft. Die zweite Priorität ist dabei höher als die erste Priorität und das zweite Datenpaket soll ebenfalls an den gleichen Empfänger wie das erste Datenpaket übertragen werden.

Daraufhin wird in Schritt S4 der Sendevorgang des ersten Datenpaketes innerhalb eines der Datenframes des ersten Datenpaketes abgebrochen. Es wird die Übertragung desjenigen Datenframes abgebrochen, der sich zu dem Zeitpunkt des Empfangs des zweiten Datenpaketes im Sendevorgang befindet. Der Sendevorgang wird also schnellstmöglich abgebrochen. Es wird nicht abgewartet, bis ein Datenframe komplett übertragen ist. Daraufhin wird in Schritt S5 das zweite Datenpaket von dem Sender zu dem Empfänger übertragen.

Der Sendevorgang des ersten Datenpaketes kann fortgeführt werden, wenn die Übertragung des zweiten Datenpaketes abgeschlossen ist. Der abgebrochene Datenframe wird dabei wiederholt übertragen, da er zuvor nicht korrekt vom Empfänger empfangen werden konnte. Hierfür wird das erste Datenpaket während des Übertragungsvorgangs des zweiten Datenpaketes in dem Sender zwischengespeichert. Es kann beispielsweise das gesamte erste Datenpaket zwischengespeichert werden oder nur derjenige Teil des ersten Datenpaketes, der noch nicht komplett zu dem Empfänger übertragen wurde.

## Patentansprüche

1. Verfahren zur Übertragung von Datenpaketen (100) in einem Ethernet-Automatisierungsnetzwerk, wobei die Datenpakete aus mehreren Datenframes (102) bestehen, wobei eine Mindestgröße der Datenframes (102) weniger als 64 Bytes beträgt, und wobei das Verfahren die folgenden Schritte umfasst:
- Empfang (S1) eines ersten Datenpakets mit einer ersten Priorität durch einen Sender (200),
- Start (S2) eines Sendevorgangs des ersten Datenpakets von dem Sender zu einem Empfänger,
- Empfang (S3) eines zweiten Datenpakets mit einer zweiten Priorität zu einem Zeitpunkt durch den Sender (200), wobei die zweite Priorität höher als die erste Priorität ist, wobei das zweite Datenpaket an den Empfänger übertragen werden soll, und daraufhin
- Abbruch (S3) des Sendevorgangs des ersten Datenpakets innerhalb eines (102") der Datenframes (102) des ersten Datenpakets, der sich zu dem Zeitpunkt des Empfangs des zweiten Datenpakets im Sendevorgang befindet, und daraufhin
- Übertragung (S4) des zweiten Datenpakets von dem Sender (200) zu dem Empfänger,
wobei jeder Datenframe (102) des ersten Datenpakets während des Sendevorgangs in einem Zwischenspeicher zwischengespeichert wird, und wobei im Falle des Abbruchs des Sendevorgangs der Datenframe (102) nochmals aus dem Zwischenspeicher übertragen wird, dessen Übertragung abgebrochen wird, nachdem das zweite Datenpaket übertragen wurde.

2. Verfahren nach einem der vorhergehenden Ansprüche, wobei der Sendevorgang des ersten Datenpakets und die Übertragung des zweiten Datenpakets über einen Übertragungsweg von dem Sender zu dem Empfänger erfolgt, und wobei dieser Übertragungsweg ausschließlich für Datenübertragungen von dem Sender (200) zu dem Empfänger genutzt wird.

3. Verfahren nach einem der vorhergehenden Ansprüche, wobei die Übertragung des ersten Datenpakets nach Übertragung eines Nibbles oder eines Bytes abgebrochen wird.

4. Verfahren nach einem der vorhergehenden Ansprüche, wobei der Sender (200) einen Datenframe der Datenframes (102) des ersten und des zweiten Datenpakets sofort weiterleitet, nachdem ein erster Teil dieses Datenframes empfangen wurde.

5. Verfahren nach einem der vorhergehenden Ansprüche, wobei jeder der Datenframes (102) des ersten und des zweiten Datenpakets eine Zieladresse umfasst, wobei die Zieladresse festlegt, über welchen Netzwerkanschluss des Senders (200) der jeweilige Datenframe an den Empfänger übertragen wird.

6. Verfahren nach einem der vorhergehenden Ansprüche, wobei das zweite Datenpaket Echtzeitdaten des Automatisierungsnetzwerks umfasst.

7. Sender (200) für ein Ethernet-Automatisierungsnetzwerk zur Übertragung von Datenpaketen, wobei die Datenpakete aus mehreren Datenframes (102) bestehen, wobei eine Mindestgröße der Datenframes (102) weniger als 64 Bytes beträgt, mit:
- Mitteln (208'; 208'')) zum Empfang eines ersten Datenpakets mit einer ersten Priorität,
- Mitteln (202; 206; 208) zum Start eines Sendevorgangs des ersten Datenpakets zu einem Empfänger,
- Mitteln (208; 208") zum Empfang eines zweiten Datenpakets mit einer zweiten Priorität, wobei die zweite Priorität höher als die erste Priorität ist, und wobei das zweite Datenpaket an den Empfänger übertragen werden soll,
- Mitteln (202; 206) zum Abbruch des Sendevorgangs des ersten Datenpakets innerhalb eines der Datenframes (102) des ersten Datenpakets, der sich zu dem Zeitpunkt des Empfangs des zweiten Datenpakets im Sendevorgang befindet,
- Mitteln (202; 206; 208) zur Übertragung des zweiten Datenpakets zu dem Empfänger;
- einem Zwischenspeicher, der dazu ausgebildet ist, jeden Datenframe (102) des ersten Datenpakets während des Sendevorgangs zu speichern, und wobei im Falle des Abbruchs des Sendevorgangs der Datenframe (102) nochmals aus dem Zwischenspeicher übertragen wird, dessen Übertragung abgebrochen wurde, nachdem das zweite Datenpaket übertragen wurde.

8. Computerprogrammprodukt (204) mit durch einen Sender (200) ausführbaren Instruktionen (206), die bei Ausführung den Sender (200) zur Durchführung jeden Schrittes eines Verfahrens nach einem der Ansprüche 1 bis 6 veranlassen.

9. Automatisierungsnetzwerk mit zumindest einem Sender (200) nach Anspruch 7.

## Claims

1. Method for transmitting data packets (100) in an Ethernet automation network, wherein the data packets consist of a plurality of data frames (102), wherein a minimum size of the data frames (102) is less than 64 bytes, and wherein the method comprises the following steps of:
- receiving (S1) a first data packet having a first priority by a transmitter (200),
- starting (S2) a transmit operation to send the first data packet from the transmitter to a receiver,
- receiving (S3) a second data packet having a second priority at an instant in time by the transmitter (200), wherein the second priority is higher than the first priority, wherein the second data packet is to be transmitted to the receiver, and thereupon
- aborting (S3) the transmit operation of the first data packet within one (102") of the data frames (102) of the first data packet which is currently engaged in the transmit operation at the time of the reception of the second data packet, and thereupon
- transmitting (S4) the second data packet from the transmitter (200) to the receiver,
wherein each data frame (102) of the first data packet is temporarily stored in a buffer during the transmit operation, and wherein in the event of the transmit operation being aborted the data frame (102) whose transmission is aborted is retransmitted from the buffer after the second data packet has been transmitted.

2. Method according to one of the preceding claims, wherein the transmit operation of the first data packet and the transmission of the second data packet take place over one transmission path from the transmitter to the receiver, and wherein said transmission path is used exclusively for data transfers from the transmitter (200) to the receiver.

3. Method according to one of the preceding claims, wherein the transmission of the first data packet is aborted after transmission of one nibble or one byte.

4. Method according to one of the preceding claims, wherein the transmitter (200) forwards a data frame of the data frames (102) of the first and of the second data packet immediately after a first part of said data frame has been received.

5. Method according to one of the preceding claims, wherein each of the data frames (102) of the first and of the second data packet includes a destination address, wherein the destination address specifies via which network interface of the transmitter (200) the respective data frame is transmitted to the receiver.

6. Method according to one of the preceding claims, wherein the second data packet includes real-time data of the automation network.

7. Transmitter (200) for an Ethernet automation network for transmitting data packets, wherein the data packets consist of a plurality of data frames (102), wherein a minimum size of the data frames (102) is less than 64 bytes, said transmitter comprising:
- means (208'; 208")) for receiving a first data packet having a first priority,
- means (202; 206; 208) for starting a transmit operation of the first data packet to a receiver,
- means (208; 208") for receiving a second data packet having a second priority, wherein the second priority is higher than the first priority, and wherein the second data packet is to be transmitted to the receiver,
- means (202; 206) for aborting the transmit operation of the first data packet within one of the data frames (102) of the first data packet which is located in the transmit operation at the time of the reception of the second data packet,
- means (202; 206; 208) for transmitting the second data packet to the receiver;
- a buffer which is embodied for the purpose of storing each data frame (102) of the first data packet during the transmit operation, and wherein in the event that the transmit operation is aborted the data frame (102) whose transmission was aborted is retransmitted from the buffer after the second data packet has been transmitted.

8. Computer program product (204) comprising instructions (206) which can be executed by a transmitter (200) and which upon being executed cause the transmitter (200) to perform each step of a method according to one of claims 1 to 6.

9. Automation network comprising at least one transmitter (200) according to claim 7.

## Revendications

1. Procédé de transmission de paquets (100) de données dans un réseau d'automatisation éthernet, les paquets de données étant constitués de plusieurs trames (102) de données, une dimension minimum des trames (102) de données étant d'au moins 64 octets et le procédé comprenant les stades suivants :
- réception (S1) d'un premier paquet de données ayant une première priorité par un émetteur (200),
- début (S2) d'une opération d'émission du premier paquet de données de l'émetteur à un récepteur,
- réception (S3) d'un deuxième paquet de données ayant une deuxième priorité à un instant par l'émetteur (200), la deuxième priorité étant plus grande que la première priorité, le deuxième paquet de données devant être transmis au récepteur, et ensuite
- interruption (S3) de l'opération d'émission du premier paquet de données à l'intérieur de l'une (102") des trames (102) de données du premier paquet de données, qui se trouve dans l'opération d'émission à l'instant de la réception du deuxième paquet de données, et ensuite
- transmission (S4) du deuxième paquet de données de l'émetteur (200) au récepteur,
dans lequel on mémorise intermédiairement dans une mémoire tampon chaque trame (102) de données du premier paquet de données pendant l'opération d'émission et dans lequel, dans le cas de l'interruption d'émission, on transmet encore une fois à partir de la mémoire tampon la trame (102) de données dont la transmission a été interrompue après que le deuxième paquet de données a été transmis.

2. Procédé suivant l'une des revendications précédentes, dans lequel l'opération d'émission du premier paquet de données et la transmission du deuxième paquet de données s'effectue par une voie de transmission allant de l'émetteur au récepteur et cette voie de transmission est utilisée exclusivement pour des transmissions de données de l'émetteur (200) au récepteur.

3. Procédé suivant l'une des revendications précédentes, dans lequel on interrompt la transmission du premier paquet de données après la transmission d'un demi octet ou d'un octet.

4. Procédé suivant l'une des revendications précédentes, dans lequel l'émetteur (200) achemine une trame de données des trames (102) de données du premier et du deuxième paquet de données immédiatement après avoir reçu une première partie de cette trame de données.

5. Procédé suivant l'une des revendications précédentes, dans lequel chacune des trames (102) de données du premier et du deuxième paquets de données comprend une adresse de destination, l'adresse de destination fixant la connexion de réseau de l'émetteur (200) par laquelle la trame de données respective est transmise au récepteur.

6. Procédé suivant l'une des revendications précédentes, dans lequel le deuxième paquet de données comprend des données en temps réel du réseau d'automatisation.

7. Emetteur (200) pour un réseau d'automatisation éthernet pour la transmission de paquets de données, les paquets de données étant constitués de plusieurs trames (102) de données, une dimension minimum des trames (102) de données étant d'au moins 64 octets, comprenant :
- des moyens (208', 208") de réception d'un premier paquet de données ayant une première priorité,
- des moyens (202, 206, 208) pour faire débuter une opération d'émission du premier paquet de données vers un récepteur,
- des moyens (208, 208") de réception d'un deuxième paquet de données ayant une deuxième priorité, la deuxième priorité étant plus grande que la première priorité et le deuxième paquet de données devant être transmis au récepteur,
- des moyens (202, 206) d'interruption de l'opération d'émission du premier paquet de données dans l'une des trames (102) de données du premier paquet de données, qui se trouve dans l'opération d'émission à l'instant de la réception du deuxième paquet de données,
- des moyens (202, 206, 208) de transmission du deuxième paquet de données au récepteur,
- une mémoire tampon constituée pour mémoriser chaque trame (102) de données du premier paquet de données pendant l'opération d'émission et dans lequel, dans le cas de l'interruption de l'opération d'émission, il est transmis encore une fois à partir de la mémoire tampon la trame (102) de données dont la transmission a été interrompue après que le deuxième paquet de données a été transmis.

8. Produit (204) de programme d'ordinateur ayant des instructions (206) pouvant être exécutées par un émetteur (200) qui font, lorsqu'elles sont exécutées, que l'émetteur (200) effectue chaque stade d'un procédé suivant l'une des revendications 1 à 6.

9. Réseau d'automatisation ayant au moins un émetteur (200) suivant la revendication 7.
